# EUROPÄISCHE PATENTSCHRIFT

(11) **EP 0 995 667 B1**
(45) Veröffentlichungstag und Bekanntmachung des Hinweises auf die Patenterteilung: **27.11.2002**
(21) Anmeldenummer: 99118955.6
(22) Anmeldetag: 27.09.1999
(51) Int. Cl.: B62D 29/00

(54) **Verbundbauteil für Fahrzeugkarosserien**
Composite member for vehicle bodies
Elément composite pour carrosseries de véhicule

(30) Priorität: 21.10.1998 DE 19848539
(43) Veröffentlichungstag der Anmeldung: 26.04.2000
(60) Teilanmeldung: 01128467.6
(73) Patentinhaber: ArvinMeritor GmbH, 63128 Dietzenbach (DE)
(72) Erfinder: Böhm, Horst, 60599 Frankfurt (DE); Grimm, Rainer, 60599 Frankfurt (DE); Becher, Thomas, 63110 Rodgau (DE)
(74) Vertreter: Oppermann, Mark, Dipl.-Ing.

(56) Entgegenhaltungen:
- DE-C- 19 632 055
- GB-A- 2 311 966

## Beschreibung

Die Erfindung bezieht sich auf ein Verbundbauteil für Fahrzeugkarosserien, insbesondere für Fahrzeugdächer, entsprechend dem Oberbegriff des Patentanspruchs 1.

Erfindungsgemäß ausgebildete Verbundbauteile sind grundsätzlich für alle Flächenbereiche von Fahrzeugkarosserien, einschließlich der Hauben, Türen und Klappen/Deckel, geeignet, für die neben einer ausreichenden Beulsteifigkeit und Festigkeit wie Biegefestigkeit und Torsionsfestigkeit bei geringem Gewicht gute Wärme- und/oder Schallisolationseigenschaften verlangt werden. Wenn nachfolgend von einem Fahrzeugdach bzw. einer Motorhaube die Rede ist, handelt es sich zwar um bevorzugte Anwendungsorte der Erfindung, jedoch ohne darauf einschränkende Bedeutung.

Um bei einem bekannten Dachaufbau (DE 79 29 367 U1) der im Oberbegriff des Patentanspruchs 1 angegebenen Ausbildung eine ausreichende Beulsteifigkeit zu erreichen, ist ein zunächst getrennter verwindungssteifer Halbzeug-Profilrahmen anzufertigen, der dann an der Dachhaut längs deren Rändern unlösbar zu befestigen ist. Die aufgeschäumte Kunststoffschicht überdeckt auch den mit der Dachhaut unlösbar verbundenen Halbzeug-Profilrahmen. Soll eine aus Leichtmetall oder aus Kunststoff bestehende Dachhaut wirksam gegen Einbeulung versteift werden, ist nach dem bekannten Vorschlag wenigstens eine sich quer zu den Längsholmen des Halbzeug-Profilrahmens erstreckende Profilstrebe vorzusehen. Der bekannte Dachaufbau erfordert einen erheblichen Fertigungs- und Materialaufwand.

Entsprechendes gilt für die aus der GB 2 311 966 A bekannten Verbundbauteile für Fahrzeugkarosserien. Gemäß diesem Stand der Technik werden eine äußere Schale und eine innere Schale für das Verbundbauteil mittels Spritzgießen aus Kunststoff hergestellt und in einem Folgeschritt durch einen Kunststoffschweißvorgang oder unter Zuhilfenahme von Klebstoff entlang ihrer Ränder fest und dicht miteinander verbunden. Dann wird der entstandene Hohlkörper mit einer aushärtenden Füllung aus Kunststoff gefüllt. Alternativ dazu kann auch ein Füllkörper vorgefertigt werden, der zwischen der äußeren und der inneren Schale einzufügen ist, wenn diese miteinander verbunden werden. Für höhere Festigkeitserfordernisse sind Versteifungsteile aus Aluminium im Hohlraum zwischen äußerer und innerer Schale vorzusehen, wobei die äußere Schale mit Kanälen zur Aufnahme der Versteifungsteile ausgebildet ist.

Schließlich sind auch Dächer aus Verbundwerkstoff bekannt (DE 32 02 594 C2), die aus einer luft- und regendichten Außenschicht, einer mittleren, eigensteifen Waben-/Strukturschicht mit Aluminium- oder Pappstegen bzw. halbharten Schaum- und Vliesstrukturen, einer halbsteifen, porösen Innenschicht und einer Polster- und/oder Dekorschicht mittels eines Heißpreßverfahrens gefertigt sind.

Der Erfindung liegt die Aufgabe zugrunde, ein gegenüber dem gattungsbildenden Stand der Technik vereinfachtes, leichtes aber dennoch ausreichend steifes Verbundbauteil für Fahrzeugkarosserien bereitzustellen, welches auch einfach hergestellt werden kann.

Die gestellte Aufgabe wird durch die im Anspruch 1 angegebenen Merkmale gelöst. Vorteilhafte und/oder zweckmäßige Weiterbildungen gehen aus den Unteransprüchen 2 bis 25 hervor und werden nachfolgend ebenfalls erläutert.

Erfindungsgemäß ist bei einem Verbundbauteil für Fahrzeugkarosserien, welches eine tiefgezogene Außenhaut und eine der Innenseite der Außenhaut aufgeschäumte Kunststoffschicht aufweist, die auf ihrer Oberfläche ggf. mit einem textilen Flächengebilde oder einer dekorativen Kunststoffolie versehen ist, die Außenhaut an ihren Rändern rahmenlos ausgebildet und mit einer umlaufenden Aufkantung versehen, wobei die geschäumte Kunststoffschicht bis zu der Aufkantung reicht und in der geschäumten Kunststoffschicht über den gesamten Flächenbereich der Außenhaut eine an sich nicht steife Armierung vorgesehen ist, durch welche der Elastizitätsmodul der geschäumten Kunststoffschicht erhöht ist.

Durch die erfindungsgemäßen Maßnahmen wird ein Verbundbauteil für Fahrzeugkarosserien geschaffen, das ohne aufwendige zusätzliche Profilelemente für Rahmen und Streben auskommt, dennoch aufgrund des Zusammenwirkens von Außenhaut und armierter Kunststoffschicht eine Beulsteifigkeit und Gesamtfestigkeit erhält, die allen Anforderungen an die Formstabilität des Verbundbauteils bei allen Betriebsbeanspruchungen des Fahrzeugs genügt. Die erfindungsgemäß vorgesehene nicht eigensteife Armierung innerhalb der Kunststoffschicht ermöglicht eine wirksame Armierung der Kunststoffschicht bis in die Randbereiche der auf besondere Weise mit einer umlaufenden Aufkantung ausgebildeten Außenhaut hinein.

Als Armierung kommen nichteigensteife bzw. biegeschlaffe Gewebe, Gewirke, Vliese, Gitter, Matten u.dgl. aus beispielsweise Glas-, Kunststoff- (z.B. Polyester- oder Aramid-) und/oder Kohle-Fasern in Betracht, soweit sie sich der Form der Außenhaut bis in deren Randbereiche hinein anpassen und von dem aufschäumenden Kunststoff in dem geschlossenen Schäumwerkzeug durchdrungen und umhüllt werden können. Vorzugsweise werden aber gemäß Anspruch 2 Faserstoffe für die Bildung der Armierung verwendet, welche als Faserlängenabschnitte in gleichmäßiger Verteilung, aber in ungeordneter Lage der Kunststoffschicht einverleibt sind. Besonders gute Ergebnisse wurden durch Verwendung einer Armierung aus Glasfaserstoffen gemäß Anspruch 3 erzielt, die in Längenabschnitten von verdrillten Glasfaserbündeln von etwa 4800 tex zwischen ca. 12,5 mm und ca. 100 mm Länge vorliegen. Der Elastizitätsmodul des geschäumten Kunststoffes, der ohne diese Armierung etwa einen Wert von 300 N/mm² aufweist, konnte entsprechend Anspruch 4 bei Einbringung einer Glasfaserarmierung von 25 Gew.% bezogen auf das Gesamtgewicht des armierten Kunststoffschaums auf über 1600 N/mm² erhöht werden.

Die Glasfaserstoffe können gemäß Anspruch 5 in Längenabschnitten unterschiedlicher Länge verwendet werden, wobei durch Verwendung zweier unterschiedlicher Längen mit einem größeren Anteil an der kleineren Länge - gemäß Anspruch 6 etwa zwei Drittel der Glasfasermenge - besonders gute Armierungsergebnisse erzielt worden sind. Im Rahmen des im Anspruch 3 angegebenen Längenabschnittsbereichs können aber auch nach Anspruch 7 Längenabschnitte einheitlicher Länge zum Einsatz kommen.

Für die Außenhaut eignen sich metallische Werkstoffe wie Stahloder Aluminiumbleche. Aber auch die Verwendung einer vakuumtiefgezogenen Außenhaut aus einer thermoplastischen Kunststofffolie, vorzugsweise einer zweischichtigen Koextrusionsfolie gemäß Anspruch 8, ergibt ein Verbundbauteil überzeugender Stabilität. Die Koextrusionsfolie besteht vorteilhaft aus den im Anspruch 9 angegebenen Werkstoffen, nämlich PMMA für die äußere Schicht sowie einer Mischung aus PC und ASA für die innere Schicht, und weist die dort angegebenen Schichtdickenverhältnisse auf, wonach die Dicke der äußeren Schicht vorzugsweise etwa 15 % der Gesamtdicke der Außenhaut ausmacht. Beispielsweise beträgt die Gesamtdicke der Koextrusionsfolie etwa 1,3 mm, wovon etwa 0,2 mm auf die äußere Schicht entfallen.

Die Verwendung einer Kunststoffolie bietet auch den Vorteil, daß gemäß Anspruch 10 der Kunststoff in der Masse in der gewünschten Farbe durchgefärbt sein kann, so daß das Verbundbauteil nachträglich nicht zusätzlich zu lackieren ist. Wie im Anspruch 11 angegeben kann die Kunststoffolie außerdem durch Verwendung einer hochglanzpolierten Tiefziehform bei Herstellung der schalenförmigen Außenhaut eine glänzende Oberfläche oder durch vorhergehendes Kalandrieren eine genarbte Oberfläche erhalten.

Wenn die Außenhaut gemäß Anspruch 12 aus einem dünnen Aluminiumblech geformt ist, kann dessen Dicke dank der armierten Kunststoffschicht im Interesse einer Gewichtsersparnis verhältnismäßig gering sein, vorzugsweise ca. 0,6 mm. Für die Außenhaut besonders geeignet ist die im Anspruch 13 angegebene Aluminiumlegierung AlMg 0,4 Si 1,2.

Bei Verwendung eines Aluminiumblechs als Werkstoff für die tiefgezogene Außenhaut kann das Blech vor seiner hydraulischen Tiefziehverformung in der gewünschten Farbe fertig lackiert und mit einer Schutzfolie versehen sein, wie im Anspruch 14 angegeben. Bei der Tiefziehverformung bleibt die Lackschicht unversehrt, wie sich nach Abziehen der Schutzfolie zeigt. Der Lackaufbau kann mehrschichtig sein, um die Verformung des Aluminiumblechs ohne Risse oder sonstige Beschädigungen zu überstehen. Auf einer Primärschicht auf Epoxydharzbasis von etwa 5 bis 7 µm Dicke kann ein Decklack auf Polyesterbasis von etwa 18 bis 23 µm Dicke aufgetragen sein, der wiederum von einer Klarlackschicht aus PVDF von 22 µm Dicke überdeckt sein kann. Die Einbrenntemperatur für einen derartigen mehrschichtigen Lackaufbau beträgt etwa 240°C. Die hydraulische Tiefziehverformung des fertig lackierten Aluminiumblechs kann in mehreren Stufen, beispielsweise drei Stufen, erfolgen. Tiefziehgeschwindigkeiten von 60 mm/s haben sich als unschädlich für den Lackaufbau erwiesen.

Nach Anspruch 15 geht die Aufkantung der Außenhaut vor Randbeschnitt in einen davon nach außen abgewinkelten umlaufenden Flanschrand über, wobei die armierte Kunststoffschicht an der Aufkantung entlang bis auf den Flanschrand geführt ist. Das Randbeschneiden des Verbundbauteils beispielsweise durch Konturfräsen oder Laserschnitt entfernt den abgewinkelten umlaufenden Flanschrand und den äußeren Bereich der Aufkantung der Außenhaut sowie die an den dabei abfallenden Bereichen anhaftende armierte Kunststoffschicht. Es bleibt nach dem Beschneiden ein für die Festigkeit erheblicher Aufkantungsrand der Außenhaut und die armierte Kunststoffschicht am Aufkantungsrand erhalten. Der Randschnitt wird sowohl durch die Aufkantung als auch durch die armierte Kunststoffschicht geführt, wodurch eine Schnittfläche entsteht, die bei einer Ausbildung als Fahrzeugdach unmittelbar auf den an der Fahrzeugkarosserie befindlichen Dachrahmen aufgesetzt werden kann.

Der Anspruch 16 gibt hier eine Ausbildungsvariante für die umlaufende Aufkantung der Außenhaut an, gemäß der die Aufkantung in einen davon nach außen abgewinkelten umlaufenden Flanschrand übergeht, welcher beim Aufschäumen der Kunststoffschicht auf der Innenseite der Außenhaut einer Dichtung über seine gesamte Breite flächig anliegt, um zwischen Unterteil und Oberteil der Schäumform abzudichten. Bei dieser Ausbildungsvariante entfällt das oben angesprochene Randbeschneiden nach dem Schäumvorgang gänzlich. Vielmehr kann bereits beim Tiefziehen der Außenhaut oder in einem Folgeschritt der nach außen abgewinkelte umlaufende Flanschrand zur Ausbildung einer definierten Abschlußgeometrie der Außenhaut gestanzt oder feingeschnitten werden. Der umlaufende Flanschrand sorgt bei dem dann folgenden Schäumvorgang unter flächiger Anlage an einer Dichtung der Schäumform vorteilhaft für eine gute und saubere Abdichtung der Schäumform. Zwar ist es grundsätzlich möglich, daß die Außenhaut vor dem Schäumvorgang nur eine umlaufende Aufkantung aufweist, ohne einen davon nach außen abgewinkelten Flanschrand, der ggf. bereits entfernt wurde. Jedoch gestaltet sich dann die Abdichtung der Schäumform schwieriger, insbesondere kann die scharfe Abschlußkante der Aufkantung einen negativen Einfluß auf die Standzeit der Dichtung der Schäumform haben.

Nach einer besonders vorteilhaften Ausgestaltung des Verbundbauteils gemäß Anspruch 17 ist auf die Aufkantung der tiefgezogenen Außenhaut eine Dichtung aufgesteckt, die einen zweischenkligen, im wesentlichen U-förmigen Querschnitt aufweist, wobei der innere Schenkel der Dichtung an die Kunststoffschicht angeschäumt ist, während der äußere Schenkel die Dichtungsfläche bildet. Im Ergebnis ist das Verbundbauteil nach dem Aufschäumen der Kunststoffschicht auf der Innenseite der Außenhaut in vorteilhafter Weise bereits mit einer integrierten Dichtung versehen, die das Verbundbauteil gegenüber angrenzenden Karosseriebauteilen abdichtet, ohne daß dazu weitere Arbeitsschritte, beispielsweise das Aufstecken einer zusätzlichen, zunächst getrennt bereitzustellenden Dichtung auf das fertige Verbundbauteil vonnöten wären, was weitere Kosteneinsparungen mit sich bringt. Diese Ausgestaltung bietet noch den zusätzlichen Vorteil, daß die Dichtung schon beim Schäumvorgang zwischen dem Unterteil und dem Oberteil der Schäumform abdichten kann, wie im Anspruch 18 angegeben, so daß an dieser Stelle in der Schäumform keine Dichtung vorgesehen werden muß, die durch wiederholten Gebrauch verschleißen würde.

Die Kunststoffschicht besteht wie im Anspruch 19 angegeben aus einem PUR-Schaum, der aus einem Polyol und einem Isocyanat im angegebenen Mischungsverhältnis, nämlich etwa 1 zu 2, gebildet ist. Die Mischung der beiden Kunststoffkomponenten mit der Glasfaserarmierung erfolgt nach dem bekannten LFI-Verfahren (Long Fiber Injection).

Die im Mischkopf durchmischte flüssige Kunststoff/Glasfaser-Masse wird hierbei auf die mit ihrer Innenseite nach oben weisend in das Unterteil des Schäumwerkzeugs eingelegte tiefgezogene Außenhaut etwa in deren Mitte beginnend über einen etwa spiralförmigen Weg aufgetragen, bevor das Werkzeugoberteil in die der vorgesehenen Dicke der geschäumten Kunststoffschicht entsprechende Position oberhalb des Werkzeugunterteils gebracht wird. Der auftreibende Schaum füllt die Form und dringt bis in die ggf. später zu beschneidenden Randbereiche der Außenhaut, jedenfalls bis zur umlaufenden Aufkantung der Außenhaut vor.

Wird eine Kunststoffolie als Außenhaut verwendet, wird die Innenseite der Außenhaut entsprechend Anspruch 20 zweckmäßig vor dem Auftragen des schäumbaren Kunststoffs zur Aktivierung abgeflämmt, wodurch eine ausgezeichnete Verbindung der Außenhaut mit der geschäumten Kunststoffschicht erzielt wird.

Falls auf der Oberfläche der aufgeschäumten Kunststoffschicht ein dekoratives Flächengebilde vorgesehen werden soll, kann dieses aus den im Anspruch 21 aufgeführten Materialien ausgewählt werden und wird in der Schäumform auf die der Außenhaut abgelegene Seite der Kunststoffschicht aufgebracht, so daß es zu einer festen Verbindung zwischen der aufschäumenden Kunststoffschicht und dem dekorativen Flächengebilde kommt. Zweckmäßig ist hierbei das dekorative Flächengebilde vorübergehend an dem Oberteil des Schäumwerkzeugs aufgespannt, wird von diesem in die Schäumposition mitgenommen und verbleibt nach der Entfernung des Werkzeugoberteils auf der Kunststoffschicht.

Bei Verwendung eines porösen dekorativen Flächengebildes ist gemäß Anspruch 22 vorgesehen, daß das Flächengebilde in sich mehrschichtig aufgebaut ist, wobei das Flächengebilde mit einer der Kunststoffschicht zugekehrten Sperrschicht versehen ist, welche ein Durchschlagen des aufschäumenden Kunststoffs durch die Poren des dekorativen Flächengebildes in dessen Sichtbereich hinein verhindert.

Das Verbundbauteil kann in vorteilhafter Weise schon beim Schäumvorgang mit weiteren Funktionselementen versehen werden. So stellt der Anspruch 23 auf ein Verbundbauteil für insbesondere ein Fahrzeugdach ab, dessen Außenhaut eine Öffnung aufweist, wobei auf der von der Außenhaut abgelegenen Seite der Kunststoffschicht ein Führungsprofil für einen die Öffnung wahlweise verschließenden Schiebedeckel angeschäumt ist.

Gemäß Anspruch 24 kann weiterhin auf der von der Außenhaut abgelegenen Seite der Kunststoffschicht schon beim Schäumvorgang eine schallabsorbierende Oberflächenstruktur hinterschäumt werden, wodurch sich die Schallisolationseigenschaften des Verbundbauteils für die Ausbildung von z.B. Motorhauben auf einfache Weise noch verbessern lassen. Anstelle von oder zusätzlich zu diesen die Makrogeometrie der Oberfläche der Kunststoffschicht betreffenden Maßnahmen kann schließlich auch eine den jeweiligen Schallisolationserfordernissen entsprechende Gestaltung der Mikrogeometrie der von der Außenhaut abgewandten Seite des Verbundbauteils erfolgen, wie im Anspruch 25 angegeben, gemäß dem auf der von der Außenhaut abgelegenen Seite der Kunststoffschicht partiell Dämpfungsbereiche mit verminderter Dichte des Schaummaterials angeschäumt sind. Dieses Anschäumen der Dämpfungsbereiche an die Kunststoffschicht erfolgt zweckmäßig in einem zweiten Schuß, d.h. nach Aufschäumen der Kunststoffschicht auf der Innenseite der Außenhaut werden die Dämpfungsbereiche in einem Folgeschritt an die Kunststoffschicht angeschäumt.

Im folgenden wird die Erfindung anhand bevorzugter Ausführungsbeispiele unter Bezugnahme auf die beigefügte Zeichnung näher erläutert, wobei gleiche Bezugszahlen den gleichen bzw. entsprechenden Teilen zugeordnet sind. In der Zeichnung zeigen:
- Fig. 1: einen abgebrochenen Schnitt durch den Randbereich eines in einer geschlossenen Schäumform befindlichen Fahrzeugdachs gemäß einem ersten Ausführungsbeispiel der Erfindung,
- Fig. 2: einen abgebrochenen Schnitt durch den Randbereich des fertigen Fahrzeugdachs gemäß dem ersten Ausführungsbeispiel,
- Fig. 3: einen abgebrochenen Schnitt durch den Randbereich eines in einer geschlossenen Schäumform befindlichen, für ein Schiebedach vorgerüsteten Fahrzeugdachs gemäß einem zweiten Ausführungsbeispiel der Erfindung,
- Fig. 4: einen abgebrochenen Schnitt durch den Randbereich eines in einer geschlossenen Schäumform befindlichen Fahrzeugdachs gemäß einem dritten Ausführungsbeispiel der Erfindung,
- Fig. 5: einen abgebrochenen Schnitt durch den Randbereich eines in einer geschlossenen Schäumform befindlichen Fahrzeugdachs gemäß einem vierten Ausführungsbeispiel der Erfindung,
- Fig. 6: einen abgebrochenen Schnitt durch den Randbereich des fertigen Fahrzeugdachs gemäß dem vierten Ausführungsbeispiel, welches an einem Dachrahmen montiert ist,
- Fig. 7: eine schematische Perspektivansicht einer schon an einer PKW-Karosserie angebrachten, erfindungsgemäß ausgebildeten Motorhaube und
- Fig. 8: einen abgebrochenen Schnitt der Motorhaube entsprechend der Linie A-A in Fig. 7.

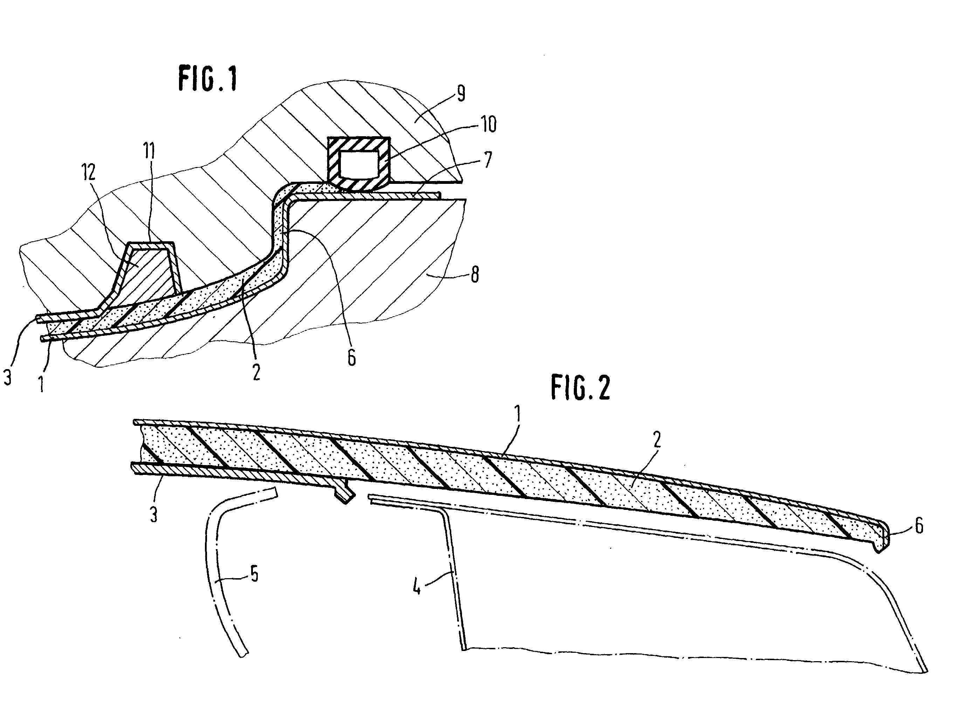

In den Fig. 1 und 2 sind eine tiefgezogene Außenhaut 1, eine der Innenseite der Außenhaut 1 aufgeschäumte Kunststoffschicht 2 und ein dekoratives auf der Sichtseite des Fahrzeugdachs befindliches Flächengebilde 3 ersichtlich. In Fig. 1 ist das Fahrzeugdach für den Schäumvorgang mit seiner Innenseite nach oben gekehrt, während in Fig. 2 das Fahrzeugdach in seiner montierten Lage dargestellt ist. In Fig. 2 sind in strichpunktierten Linien ein Dachrahmen 4 einer Fahrzeugkarosserie und eine Verkleidung 5 für den Dachrahmen 4 schematisch eingezeichnet. Das Fahrzeugdach sitzt dem Dachrahmen 4 von oben auf und ist mit diesem auf nicht dargestellte bekannte Weise verbunden.

Die Außenhaut 1 ist an ihren Rändern, von denen in den Figuren 1 und 2 stellvertretend für die anderen Ränder nur ein Rand dargestellt ist, mit einer umlaufenden Aufkantung 6 versehen, die bei diesem Ausführungsbeispiel zunächst für die Herstellung des Fahrzeugdachs eine größere Höhe (Fig. 1) aufweist als nach dem Randbeschneiden (Fig. 2). Wie aus Fig. 1 hervorgeht, geht die umlaufende Aufkantung 6 in einen davon nach außen abgewinkelten umlaufenden Flanschrand 7 über, der hier ebenso wie ein erheblicher Teil der Aufkantung 6 bei dem späteren Randbeschneidungsvorgang entfernt wird, wie sich aus einem Vergleich der Figuren 1 und 2 ergibt.

Die in Fig. 1 dargestellte Schäumform besteht aus einem die tiefgezogene Außenhaut 1 formschlüssig aufnehmenden Unterteil 8 und einem komplementären Oberteil 9, in dessen Randbereich eine aufblasbare umlaufende Dichtung 10 angeordnet ist, welche für eine Begrenzung des aufschäumenden die Kunststoffschicht 2 bildenden Kunststoffs sorgt. Das dekorative Flächengebilde 3 ist in aufgespannter Form mittels eines in einer Nut 11 des Oberteils 9 eingesetzten Spannrahmens 12 vorübergehend am Oberteil 9 der Schäumform befestigt.

Bei der Herstellung des Fahrzeugdachs wird zunächst die Außenhaut 1 tiefgezogen, im Falle der Verwendung eines Metallblechmaterials durch mehrstufiges hydraulisches Tiefziehen und im Falle der Verwendung einer Kunststoffolie durch Vakuumtiefziehen bei entsprechender Aufspannung des Folienrands. Im letzteren Fall werden beide Seiten der tiefzuziehenden Kunststoffolie durch Heizelemente auf etwa 180°C Oberflächentemperatur erwärmt. Die so erwärmte Kunststoffolie wird dem Vakuumtiefziehvorgang unterworfen.

Der tiefgezogene Vorformling der Außenhaut 1 wird danach mit seiner Innenseite nach oben weisend in das Unterteil 8 der in Fig.1 dargestellten Schäumform eingelegt, worauf der aufschäumbare Kunststoff auf die weiter vorn angegebene Weise auf die Innenseite der Außenhaut 1 aufgebracht wird. Falls es sich um eine Außenhaut aus Kunststoffolie handelt, kann diese zuvor durch Abflämmen aktiviert werden. Als Schaumkunststoff wird beispielsweise ein Schaumsystem der Firma Elastogran verwendet, bestehend aus Polyol B 237 und Isocyanat E 3509, wobei diese beiden Komponenten im Mischungsverhältnis von 100 Teile Polyol zu 210 Teile Isocyanat angewendet werden. Nach dem Auftrag der aufschäumbaren Kunststoffmasse nach dem LFI-Verfahren wird das Oberteil 9 der Form mit dem daran befestigten Flächengebilde 3 in Position gebracht, worauf der mit Glasfasern beladene aufschäumende Kunststoff den gesamten Freiraum der Schäumform bis auf die Oberseite des Flanschrands 7 und dort begrenzt durch die aufgeblasene Dichtung 10 füllt.

Beispielsweise werden 3,7 kg der Schaumkunststoffkomponenten mit 1 kg Glasfasern gemischt, was einem Glasanteil im Schaumkunststoff von < 25 Gew.% entspricht.

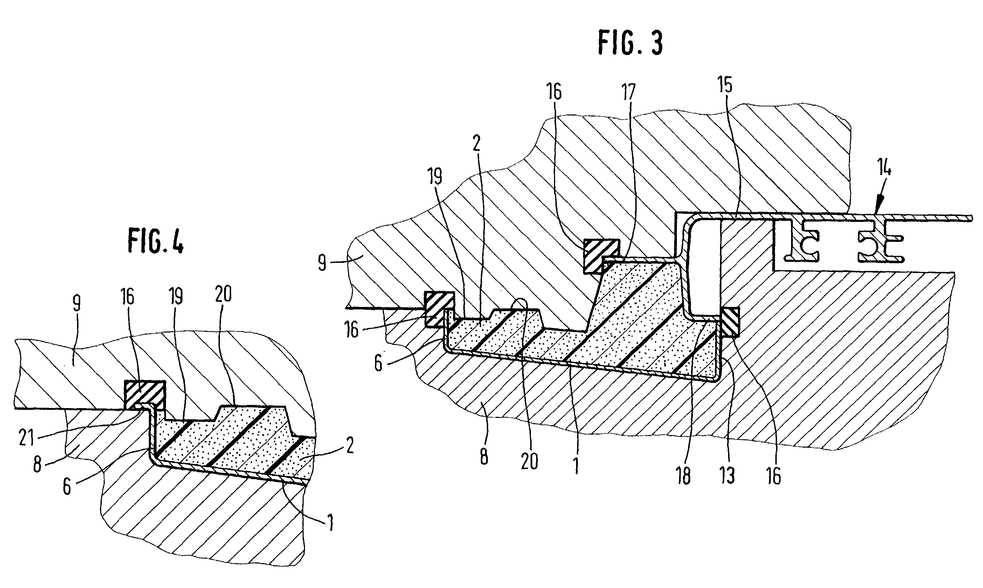

Das in Fig. 3 in der Schäumform befindliche Fahrzeugdach gemäß dem zweiten Ausführungsbeispiel soll nachfolgend nur hinsichtlich der sich vom ersten Ausführungsbeispiel unterscheidenden Merkmale beschrieben werden.

Neben der äußeren umlaufenden Aufkantung 6 besitzt bei diesem Ausführungsbeispiel die Außenhaut 1 auch eine innere umlaufende Aufkantung 13, die in der gleichen Richtung wie die Aufkantung 6 abgewinkelt ist und im fertigen Zustand des Fahrzeugdachs eine Dachöffnung begrenzt, welche mittels eines nicht gezeigten Schiebedeckels wahlweise abgedeckt werden kann. Die wie beschrieben armierte Kunststoffschicht 2 erstreckt sich bis an die Aufkantungen 6 und 13 heran, wodurch das Fahrzeugdach eine ausreichende Steifigkeit erhält.

Weiterhin ist zu erkennen, daß sich im in der Schäumform befindlichen Zustand weder an die Aufkantung 6 noch an die Aufkantung 13 ein nach außen bzw. nach innen abgewinkelter Fianschrand anschließt. Hier erfolgt ein innerer und äußerer Randbeschnitt der Außenhaut 1, bei dem auch nach dem Tiefziehvorgang ggf. noch vorhandene Flanschränder der Außenhaut 1 entfernt werden, bevor die Außenhaut 1 in das Unterteil 8 der Schäumform eingelegt wird. Zweckmäßig kann die Aufkantung 6 der in das Unterteil 8 der Schäumform eingelegten Außenhaut 1 geringfügig über das Unterteil 8 vorstehen.

Nach Einlegen der Außenhaut 1 in das Unterteil 8 der Schäumform wird ein an sich bekanntes, vorzugsweise aus einer Aluminiumlegierung stranggepreßtes Führungsprofil 14, welches Bestandteil einer Mechanik zum Verschieben des Schiebedeckels ist, ebenfalls in das Unterteil 8 der Schäumform eingelegt. Dieses bündig mit der Aufkantung 13 abschließende Führungsprofil 14 begrenzt im dargestellten geschlossenen Zustand der Schäumform den sich durch den aufschäumenden Kunststoff füllenden Hohlraum in der Schäumform, wobei das Führungsprofil 14 mit einem Schenkel 15 zwischen dem Unterteil 8 und dem Oberteil 9 der Schäumform unverrückbar festgelegt ist. Um zu verhindern, daß beim Schäumvorgang der mit Glasfasern beladene aufschäumende Kunststoff zwischen dem Unterteil 8 und dem Oberteil 9 der Schäumform aus- bzw. durchtritt, sind aus vorzugsweise EPDM bestehende Dichtungen 16 mit geeignetem Querschnitt an den Enden der Aufkantungen 6, 13 und an Endabschnitten 17, 18 des Führungsprofils 14 im Unterteil 8 bzw. im Oberteil 9 der Schäumform vorgesehen. Schließlich werden durch geeignete Ausbildung des Oberteils 9 der Schäumform eine Nut 19 sowie eine Auflagefläche 20 als Funktionsabschnitte des Fahrzeugdachs beim Schäumvorgang gleich mit erzeugt. Die Nut 19 dient bei Montage des modulartigen Fahrzeugdachs am Fahrzeug der Aufnahme einer Klebstoffraupe, mittels der das Fahrzeugdach am fahrzeugseitigen Dachrahmen befestigt wird, während die Auflagefläche 20 im montierten Zustand des Fahrzeugdachs dem Dachrahmen definiert aufliegt.

Im fertigen Zustand des Fahrzeugdachs ist das Führungsprofil 14 flächig an der Kunststoffschicht 2 angeschäumt, so daß das Führungsprofil 14 fest mit dem Fahrzeugdach verbunden ist, ohne daß weitere Befestigungsmittel notwendig wären. Besonders hervorzuheben ist hier noch, daß dieses für einen Schiebedeckel vorgerüstete Fahrzeugdach infolge seiner Ausbildung mit umlaufenden Aufkantungen 6, 13 an der Außenhaut 1 und sich dazwischen erstreckender, wie oben beschrieben armierter Kunststoffschicht 2 gänzlich ohne den im Stand der Technik üblichen Verstärkungsrahmen auskommt, der dort die Dachöffnung umgibt und an dem herkömmlicherweise die Führungsprofile für den Schiebedeckel befestigt sind.

Das in Fig. 4 gezeigte dritte Ausführungsbeispiel unterscheidet sich von dem unter Bezugnahme auf die Fig. 3 beschriebenen zweiten Ausführungsbeispiel dadurch, daß die Aufkantung 6 der Außenhaut 1 in einen davon nach außen abgewinkelten umlaufenden Flanschrand 21 übergeht. Im Gegensatz zum ersten Ausführungsbeispiel gemäß Fig. 1 ist der umlaufende Flanschrand 21 so kurz ausgebildet, daß er beim Aufschäumen der armierten Kunststoffschicht 2 auf der Innenseite der Außenhaut 1 der Dichtung 16 im Oberteil 9 der Schäumform über seine gesamte Breite flächig anliegt. Da der Flanschrand 21 dabei dem Unterteil 8 der Schäumform aufliegt, wird er im geschlossenen Zustand der Schäumform in die Dichtung 16 hineingedrückt. Im Ergebnis wird die Schäumform für den Schäumvorgang zwischen dem Unterteil 8 und dem Oberteil 9 zuverlässig abgedichtet, ohne daß die Gefahr besteht, daß die Aufkantung 6 bzw. der Flanschrand 21 die Dichtung 16 beschädigt. Auch bei diesem Ausführungsbeispiel erfolgt ein Randbeschnitt der Außenhaut 1 bevor diese in das Unterteil 8 der Schäumform eingelegt wird. Der Randbeschnitt kann gleichzeitig mit dem Tiefziehen der Außenhaut 1 oder in einem Folgeschritt dazu durch Stanzen oder Feinschneiden ausgeführt werden.

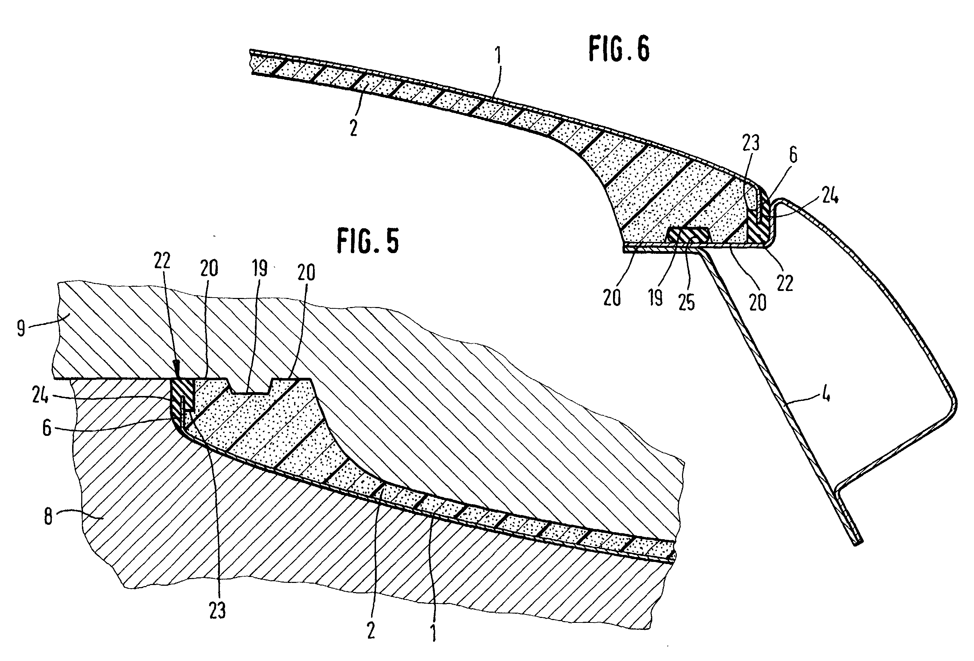

Bei dem in den Fig. 5 und 6 dargestellten vierten Ausführungsbeispiel ist auf die umlaufende Aufkantung 6 der Außenhaut 1 eine ebenfalls umlaufende Dichtung 22 aufgesteckt, die einen zweischenkligen, im wesentlichen U-förmigen Querschnitt aufweist. Gemäß Fig. 5 wird die Dichtung 22 schon beim Aufschäumen der Kunststoffschicht 2 auf der bereits randbeschnittenen Außenhaut 1 mit an die Kunststoffschicht 2 angeschäumt, und zwar mit ihrem inneren Schenkel 23, der sich allerdings nur über einen Teil der Gesamthöhe der Aufkantung 6 erstreckt, damit die armierte Kunststoffschicht 2 auch bis zur Aufkantung 6 reichen kann. Beim Schäumvorgang dient die Dichtung 22 vorteilhaft bereits als Abdichtelement zwischen dem Unterteil 8 und dem Oberteil 9 der Schäumform.

Wie in Fig. 6 zu erkennen ist, bildet der äußere Schenkel 24 der Dichtung 22 im an der Fahrzeugkarosserie montierten Zustand des Fahrzeugdachs zum einen eine Dichtungsfläche aus, um zwischen Fahrzeugdach und Dachrahmen 4 abzudichten. Zum anderen hat der äußere Schenkel 24 der Dichtung 22 aufgrund seiner Elastizität eine das Fahrzeugdach bezüglich des Dachrahmens 4 zentrierende Wirkung. Die Dichtung 22 besteht im übrigen aus einem Werkstoff, der den insbesondere thermischen und mechanischen Beanspruchungen in der Schäumform und im am Fahrzeug montierten Zustand des Fahrzeugdachs hinreichend widerstehen kann, z.B. Moosgummi oder EPDM. Die Fig. 6 veranschaulicht schließlich noch, wie das Fahrzeugdach mittels einer in der Nut 19 aufgenommenen Klebstoffraupe 25 mit dem Dachrahmen 4 der Fahrzeugkarosserie verbunden ist.

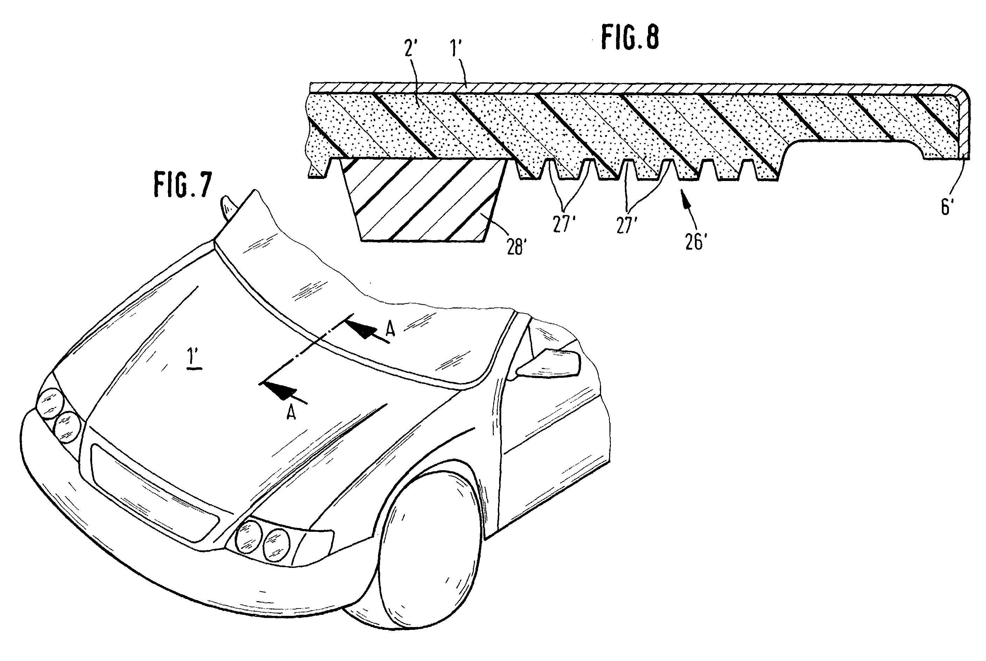

Es wurde bereits eingangs erwähnt, daß nicht nur Fahrzeugdächer, sondern beliebige Flächenbereiche von Fahrzeugkarosserien durch wie beschrieben aufgebaute Verbundbauteile ausgebildet werden können. Exemplarisch dafür ist in den Fig. 7 und 8 noch eine Motorhaube dargestellt, deren tiefgezogene Außenhaut 1' an ihren Rändern rahmenlos ausgebildet und mit einer umlaufenden Aufkantung 6' versehen ist, wobei die auf die Innenseite der Außenhaut 1' aufgeschäumte Kunststoffschicht 2', in der über den gesamten Flächenbereich der Außenhaut 1' eine an sich nicht steife Armierung vorgesehen ist, bis zu der umlaufenden Aufkantung 6' reicht.

Ferner sind in Fig. 8 Maßnahmen dargestellt, die insbesondere die Schallisolationseigenschaften solcher Verbundbauteile noch verbessern. So kann entsprechend der Nut 19 bei den unter Bezugnahme auf die Fig. 3 bis 6 beschriebenen Ausführungsbeispielen, d.h. durch entsprechende Ausbildung des Oberteils der Schäumform bereits beim Aufschäumen der Kunststoffschicht 2' auf der Innenseite der Außenhaut 1' auf der von der Außenhaut 1' abgelegenen Seite der Kunststoffschicht 2' eine schallabsorbierende Oberflächenstruktur 26' hinterschäumt werden, die in dem hier dargestellten Ausführungsbeispiel eine Mehrzahl von parallelen, die Schallreflexion beeinflussenden Nuten 27' aufweist. Ebenso ist es möglich, an diejenige Seite der Kunststoffschicht 2', welche von der Außenhaut 1' abgelegen ist, in einem zweiten Schuß partiell Dämpfungsbereiche 28' mit verminderter Dichte des PUR-Schaummaterials anzuschäumen, wobei eine poröse bzw. offenzellige Mikrostruktur der Oberfläche erzielt werden kann.

Es wird ein Verbundbauteil, insbesondere Fahrzeugdach, vorgeschlagen, bestehend aus einer tiefgezogenen Außenhaut aus Metallblech oder Kunststoffolie und einer der Innenseite der Außenhaut aufgeschäumten Kunststoffschicht. Die Kunststoffschicht besitzt eine innere Armierung durch ihr in gleichmäßiger Verteilung einverleibte Faserstoffe, vorzugsweise Glasfaserstoffe, welche dem Verbundbauteil im Zusammenwirken mit der Außenhaut eine erhebliche Formstabilität und Festigkeit verleihen. Wesentlich ist dabei, daß die faserarmierte Kunststoffschicht auch eine Randaufkantung der Außenhaut verstärkt.

## Patentansprüche

1. Verbundbauteil für Fahrzeugkarosserien, insbesondere für Fahrzeugdächer, mit einer tiefgezogenen Außenhaut (1, 1') und einer der Innenseite der Außenhaut (1, 1') aufgeschäumten Kunststoffschicht (2, 2'), die auf ihrer Oberfläche mit einem textilen Flächengebilde (3) oder einer dekorativen Kunststoffolie versehen sein kann, **dadurch gekennzeichnet, daß** die tiefgezogene Außenhaut (1, 1') an ihren Rändern rahmenlos ausgebildet und mit einer umlaufenden Aufkantung (6, 6') versehen ist, daß die Kunststoffschicht (2, 2') bis zu der Aufkantung (6, 6') reicht, und daß in der Kunststoffschicht (2, 2') über den gesamten Flächenbereich der Außenhaut (1, 1') eine an sich nicht steife Armierung vorgesehen ist, durch welche der Elastizitätsmodul der geschäumten Kunststoffschicht (2, 2') erhöht ist.

2. Verbundbauteil nach Anspruch 1, **dadurch gekennzeichnet, daß** die Armierung aus Faserstoffen gebildet ist, welche als Faserlängenabschnitte in gleichmäßiger Verteilung, aber in ungeordneter Lage der Kunststoffschicht (2, 2') einverleibt sind.

3. Verbundbauteil nach Anspruch 2, **dadurch gekennzeichnet, daß** die Armierung aus Glasfaserstoffen gebildet ist, die in Längenabschnitten von verdrillten Glasfaserbündeln von etwa 4800 tex zwischen etwa 12,5 mm und etwa 100 mm Länge vorliegen.

4. Verbundbauteil nach Anspruch 3, **dadurch gekennzeichnet, daß** der Anteil an Glasfaserstoffen bezogen auf das Gesamtgewicht des armierten Kunststoffschaums zwischen etwa 20 und 30 Gew.%, vorzugsweise etwa 25 Gew.% beträgt.

5. Verbundbauteil nach Anspruch 3 oder 4, **dadurch gekennzeichnet, daß** die Längenabschnitte aus mehreren unterschiedlichen Längen gebildet sind.

6. Verbundbauteil nach Anspruch 5, **dadurch gekennzeichnet, daß** die Längenabschnitte aus einer kleineren Länge und einer größeren Länge gebildet sind, wobei etwa zwei Drittel der Glasfasermenge aus der kleineren Länge bestehen.

7. Verbundbauteil nach Anspruch 3, **dadurch gekennzeichnet, daß** die Längenabschnitte eine einheitliche Länge aufweisen.

8. Verbundbauteil nach einem der vorhergehenden Ansprüche, **dadurch gekennzeichnet, daß** die Außenhaut (1, 1') aus einer thermoplastischen zweischichtigen Koextrusionsfolie vakuumtiefgezogen ist.

9. Verbundbauteil nach Anspruch 8, **dadurch gekennzeichnet, daß** die äußere Schicht aus Polymethylmethacrylat (PMMA) und die innere Schicht aus einer Mischung aus Polycarbonat (PC) und Acrylnitril-Styrol-Acrylsäureester-Copolymerisat (ASA) besteht, wobei die Dicke der äußeren Schicht zwischen etwa 10 bis 30 % der Gesamtdicke der Außenhaut, vorzugsweise etwa 15 % der Gesamtdicke, beträgt.

10. Verbundbauteil nach Anspruch 8 oder 9, **dadurch gekennzeichnet, daß** beide Schichten der Koextrusionsfolie in der gewünschten Farbe in der Masse durchgefärbt sind.

11. Verbundbauteil nach einem der Ansprüche 8 bis 10, **dadurch gekennzeichnet, daß** die äußere Schicht durch hochglanzpolierte Tiefziehform eine glänzende Oberfläche oder durch Kalandrieren nach der Koextrusion eine genarbte Oberfläche aufweist.

12. Verbundbauteil nach einem der Ansprüche 1 bis 7, **dadurch gekennzeichnet, daß** die Außenhaut (1, 1') aus einem dünnen Aluminiumblech hydraulisch tiefgezogen ist und eine Dicke von etwa 0,5 mm bis 0,8 mm, vorzugsweise 0,6 mm, besitzt.

13. Verbundbauteil nach Anspruch 12, **dadurch gekennzeichnet, daß** das Aluminiumblech aus einer Aluminiumlegierung der Zusammensetzung AlMg 0,4 Si 1,2 besteht.

14. Verbundbauteil nach Anspruch 12 oder 13, **dadurch gekennzeichnet, daß** das Aluminiumblech in der gewünschten Farbe fertig lackiert und mit einer Schutzfolie versehen zur Bildung der Außenhaut (1, 1') tiefgezogen ist.

15. Verbundbauteil nach einem der vorhergehenden Ansprüche, **dadurch gekennzeichnet, daß** die Aufkantung (6) der Außenhaut (1) vor Randbeschnitt in einen davon nach außen abgewinkelten umlaufenden Flanschrand (7) übergeht, wobei die Kunststoffschicht (2) an der Aufkantung (6) entlang bis auf den Flanschrand (7) geführt ist.

16. Verbundbauteil nach einem der Ansprüche 1 bis 14, **dadurch gekennzeichnet, daß** die Aufkantung (6) der Außenhaut (1) in einen davon nach außen abgewinkelten umlaufenden Flanschrand (21) übergeht, der beim Aufschäumen der Kunststoffschicht (2) auf der Innenseite der Außenhaut (1) einer Dichtung (16) über seine gesamte Breite flächig anliegt, um zwischen Unterteil (8) und Oberteil (9) der Schäumform abzudichten.

17. Verbundbauteil nach einem der Ansprüche 1 bis 14, **dadurch gekennzeichnet, daß** auf die Aufkantung (6) der Außenhaut (1) eine Dichtung (22) aufgesteckt ist, die einen zweischenkligen, im wesentlichen U-förmigen Querschnitt aufweist, wobei der innere Schenkel (23) der Dichtung (22) an die Kunststoffschicht (2) angeschäumt ist, während der äußere Schenkel (24) die Dichtungsfläche bildet.

18. Verbundbauteil nach Anspruch 17, **dadurch gekennzeichnet, daß** die Dichtung (22) bei dem Aufschäumen der Kunststoffschicht (2) auf der Innenseite der Außenhaut (1) Abdichtelement zwischen Unterteil (8) und Oberteil (9) der Schäumform ist.

19. Verbundbauteil nach einem der vorhergehenden Ansprüche, **dadurch gekennzeichnet, daß** die Kunststoffschicht aus einem PUR-Schaum, gebildet aus einem Polyol und einem Isocyanat im Mischungsverhältnis von etwa 1 zu 2, besteht.

20. Verbundbauteil nach Anspruch 19, **dadurch gekennzeichnet, daß** bei einer Außenhaut (1, 1') aus einer Kunststoffolie diese auf ihrer Innenseite vor dem Auftragen des schäumbaren Kunststoffs zur Aktivierung abgeflämmt ist.

21. Verbundbauteil nach einem der vorhergehenden Ansprüche, **dadurch gekennzeichnet, daß** auf der von der Außenhaut (1) abgelegenen Seite der Kunststoffschicht (2) ein dekoratives Flächengebilde (3), ausgewählt aus der Materialiengruppe textile Gewebe, Gewirke, Vliese, Gitter, Kunststoff- und Metallfolien, aufgebracht ist.

22. Verbundbauteil nach Anspruch 21, **dadurch gekennzeichnet, daß** bei Verwendung eines porösen dekorativen Flächengebildes (3) dieses mit einer der Kunststoffschicht (2) zugekehrten Sperrschicht versehen ist.

23. Verbundbauteil nach einem der vorhergehenden Ansprüche, **dadurch gekennzeichnet, daß** die Außenhaut (1) eine Öffnung aufweist und auf der von der Außenhaut (1) abgelegenen Seite der Kunststoffschicht (2) ein Führungsprofil (14) für einen die Öffnung wahlweise verschließenden Schiebedeckel angeschäumt ist.

24. Verbundbauteil nach einem der vorhergehenden Ansprüche, **dadurch gekennzeichnet, daß** auf der von der Außenhaut (1') abgelegenen Seite der Kunststoffschicht (2') eine schallabsorbierende Oberflächenstruktur (26') hinterschäumt ist.

25. Verbundbauteil nach einem der vorhergehenden Ansprüche, **dadurch gekennzeichnet, daß** auf der von der Außenhaut (1') abgelegenen Seite der Kunststoffschicht (2') partiell Dämpfungsbereiche (28') mit verminderter Dichte des Schaummaterials angeschäumt sind.

## Claims

1. Composite component for vehicle bodies, in particular for vehicle roofs, with a deep-drawn outer skin (1, 1') and a plastics layer (2, 2'), which is foamed onto the inside of the outer skin (1, 1') and may be provided on its surface with a textile fabric (3) or a decorative plastics film, **characterised in that** the deep-drawn outer skin (1, 1') is frameless at its edges and provided with a circulating bevel (6, 6'), that the plastics layer (2, 2') reaches up to the bevel (6, 6'), and that a reinforcement, which is not inherently rigid, is provided in the plastics layer (2, 2') over the entire surface region of the outer skin (1, 1'), by means of which reinforcement the modulus of elasticity of the foamed plastics layer (2, 2') is increased.

2. Composite component according to Claim 1, **characterised in that** the reinforcement is formed from fibrous materials, which are incorporated as longitudinal fibre portions in a uniform distribution, although in a random position in the plastics layer (2, 2').

3. Composite component according to Claim 2, **characterised in that** the reinforcement is formed from glass fibres, which are present in longitudinal portions of twisted glass-fibre bundles of approximately 4800 tex and a length of between approximately 12.5 mm and approximately 100 mm.

4. Composite component according to Claim 3, **characterised in that** the proportion of glass fibres, related to the total weight of the reinforced plastics foam, is between approximately 20 and 30 % by weight, preferably approximately 25 % by weight.

5. Composite component according to Claim 3 or 4, **characterised in that** the longitudinal portions are formed from a plurality of different lengths.

6. Composite component according to Claim 5, **characterised in that** the longitudinal portions are formed from a shorter length and a greater length, wherein approximately two thirds of the glass fibre quantity consists of the shorter length.

7. Composite component according to Claim 3, **characterised in that** the longitudinal portions are of a uniform length.

8. Composite component according to any one of the preceding Claims, **characterised in that** the outer skin (1, 1') is vacuum deep-drawn from a thermoplastic two-layer coextrusion film.

9. Composite component according to Claim 8, **characterised in that** the outer layer consists of polymethyl methacrylate (PMMA) and the inner layer of a mixture of polycarbonate (PC) and acrylonitrile/styrene/acrylate copolymer (ASA), wherein the thickness of the outer layer is between approximately 10 and 30 % of the total thickness of the outer skin, preferably approximately 15 % of the total thickness.

10. Composite component according to Claim 8 or 9, **characterised in that** both layers of the coextrusion film are dyed the desired colour as a whole.

11. Composite component according to any one of Claims 8 to 10, **characterised in that** the outer layer has a glossy surface due to a high-mirror-finished deep-drawing mould or a grained surface due to calendering following coextrusion.

12. Composite component according to any one of Claims 1 to 7, **characterised in that** the outer skin (1, 1') is deep-drawn from a thin aluminium sheet and is of a thickness of approximately 0.5 mm to 0.8 mm, preferably 0.6 mm.

13. Composite component according to Claim 12, **characterised in that** the aluminium sheet consists of an aluminium alloy of the composition AlMg 0.4 Si 1.2.

14. Composite component according to Claim 12 or 13, **characterised in that** the aluminium sheet is finish-varnished in the desired colour and, provided with a protective film, deep-drawn to form the outer skin (1, 1').

15. Composite component according to any one of the preceding Claims, **characterised in that** the bevel (6) of the outer skin (1) passes before being trimmed into a circulating flanged edge (7) which is bent outwards from the bevel, wherein the plastics layer (2) extends along the bevel (6) up to the flanged edge (7).

16. Composite component according to any one of Claims 1 to 14, **characterised in that** the bevel (6) of the outer skin (1) passes into a circulating flanged edge (21) which is bent outwards from the bevel and which, when the plastics layer (2) is foamed onto the inside of the outer skin (1), lies flatly against a seal (16) over its entire width in order to provide a seal between the bottom part (8) and the top part (9) of the foaming mould.

17. Composite component according to any one of Claims 1 to 14, **characterised in that** a seal (22) is placed over the bevel (6) of the outer skin (1), which seal has a two-limbed, substantially U-shaped cross section, wherein the inner limb (23) of the seal (22) is foamed onto the plastics layer (2), while the outer limb (24) forms the sealing face.

18. Composite component according to Claim 17, **characterised in that**, when the plastics layer (2) is foamed onto the inside of the outer skin (1), the seal (22) is the sealing element between the bottom part (8) and the top part (9) of the foaming mould.

19. Composite component according to any one of the preceding Claims, **characterised in that** the plastics layer consists of a PUR foam, formed from a polyol and an isocyanate in a mixture ratio of approximately 1 to 2.

20. Composite component according to Claim 19, **characterised in that**, in the case of an outer skin (1, 1') consisting of a plastics film, this is flame-scarfed on its inside before applying the foamable plastics material for the purpose of activation.

21. Composite component according to any one of the preceding Claims, **characterised in that** a decorative fabric (3), selected from the material group of textile woven fabrics, knitted fabrics, nonwoven fabrics, lattices, plastics films and metal foils, is applied to the side of the plastics layer (2) which is remote from the outer skin (1).

22. Composite component according to Claim 21, **characterised in that**, when using a porous decorative fabric (3), this is provided with a barrier layer facing the plastics layer (2).

23. Composite component according to any one of the preceding Claims, **characterised in that** the outer skin (1) comprises an opening, and a guide profile (14) for a sliding roof, which optionally closes the opening, is foamed onto the side of plastics layer (2) which is remote from the outer skin (1).

24. Composite component according to any one of the preceding Claims, **characterised in that** a sound-absorbing surface structure (26') is foamed onto the back of the side of the plastics layer (2') which is remote from the outer skin (1').

25. Composite component according to any one of the preceding Claims, **characterised in that** partial damping regions (28') with reduced density of the foamed material are foamed onto the side of the plastics layer (2') which is remote from the outer skin (1').

## Revendications

1. Elément composite pour carrosseries de véhicules, en particulier pour toits de véhicules, avec un revêtement extérieur fabriqué par matriçage (1, 1') et une couche de matière plastique (2, 2') qui est appliquée par moussage sur le côté intérieur du revêtement extérieur (1, 1') et qui peut être pourvue sur sa surface d'une structure textile plane (3) ou d'un film de matière plastique décoratif, **caractérisé en ce que** le revêtement extérieur fabriqué par matriçage (1, 1'), sur ses bords, est prévu sans châssis et est pourvu d'une partie repliée périphérique (6, 6'), **en ce que** la couche de matière plastique (2, 2') va jusqu'à la partie repliée (6, 6') et **en ce qu'**il est prévu dans la couche de matière plastique (2, 2'), sur toute la zone de surface du revêtement extérieur (1, 1'), une armature non rigide en soi qui augmente le module d'élasticité de la couche de matière plastique appliquée par moussage (2, 2').

2. Élément composite selon la revendication 1, **caractérisé en ce que** l'armature est formée de matières fibreuses qui sont incorporées dans la couche de matière plastique (2, 2') sous forme de tronçons de fibres avec une répartition uniforme mais dans une position désordonnée.

3. Elément composite selon la revendication 2, **caractérisé en ce que** l'armature est formée de matières en fibres de verre qui se présentent sous la forme de tronçons de faisceaux de fibres de verre torsadées d'environ 4800 tex entre environ 12,5 mm et environ 100 mm de long.

4. Elément composite selon la revendication 3, **caractérisé en ce que** la proportion de matières en fibres de verre par rapport au poids total de la mousse de matière plastique armée est située entre environ 20 et 30 % en poids, et est de préférence d'environ 25 % en poids.

5. Elément composite selon la revendication 3 ou 4, **caractérisé en ce que** les tronçons ont plusieurs longueurs différentes.

6. Elément composite selon la revendication 5, **caractérisé en ce que** les tronçons ont une petite longueur et une grande longueur, environ deux tiers de la quantité de fibres de verre présentant la petite longueur.

7. Elément composite selon la revendication 3, **caractérisé en ce que** les tronçons ont une longueur uniforme.

8. Elément composite selon l'une des revendications précédentes, **caractérisé en ce que** le revêtement extérieur (1, 1') est fabriqué par matriçage sous vide à partir d'un film thermoplastique coextrudé à deux couches.

9. Elément composite selon la revendication 8, **caractérisé en ce que** la couche extérieure se compose de poly(méthacrylate de méthyle) (PMMA) et la couche intérieure d'un mélange de polycarbonate (PC) et de copolymérisat d'acrylonitrile-styrène-ester d'acide acrylique (ASA), l'épaisseur de la couche extérieure étant située entre environ 10 et 30 % de l'épaisseur totale du revêtement extérieur et représentant de préférence environ 15 % de l'épaisseur totale.

10. Elément composite selon la revendication 8 ou 9, **caractérisé en ce que** les deux couches du film coextrudé sont teintes dans la masse dans la couleur voulue.

11. Elément composite selon l'une des revendications 8 à 10, **caractérisé en ce que** la couche extérieure présente une surface brillante grâce à une matrice polie miroir, ou une surface grainée grâce à un calandrage après la coextrusion.

12. Elément composite selon l'une des revendications 1 à 7, **caractérisé en ce que** le revêtement extérieur (1, 1') est fabriqué par matriçage hydraulique à partir d'une mince tôle d'aluminium et a une épaisseur d'environ 0,5 mm à 0,8 mm, de préférence de 0,6 mm.

13. Elément composite selon la revendication 12, **caractérisé en ce que** la tôle d'aluminium se compose d'un alliage d'aluminium de composition AlMg 0,4 Si 1,2.

14. Elément composite selon la revendication 12 ou 13, **caractérisé en ce que** la tôle d'aluminium est finalement laquée dans la couleur voulue et, pourvue d'un film protecteur, est matricée pour former le revêtement extérieur (1, 1').

15. Elément composite selon l'une des revendications précédentes, **caractérisé en ce que** la partie repliée (6) du revêtement extérieur (1), avant le rognage, se prolonge par un rebord périphérique (7) coudé vers l'extérieur par rapport à ladite partie repliée (6) , la couche de matière plastique (2) longeant la partie repliée (6) jusqu'au rebord (7).

16. Elément composite selon l'une des revendications 1 à 15, **caractérisé en ce que** la partie repliée (6) du revêtement extérieur (1) se prolonge par un rebord périphérique (21) qui est coudé vers l'extérieur par rapport à ladite partie repliée (6) et qui, lors de l'application par moussage de la couche de matière plastique (2) sur le côté intérieur du revêtement extérieur (1), est appliqué à plat, sur toute sa largeur, contre un joint d'étanchéité (16) afin de réaliser une étanchéité entre la partie inférieure (8) et la partie supérieure (9) du moule.

17. Elément composite selon l'une des revendications 1 à 14, **caractérisé en ce qu'**on enfile sur la partie repliée (6) du revêtement extérieur (1) un joint d'étanchéité (22) qui présente une section transversale à deux branches, sensiblement en U, la branche intérieure (23) du joint d'étanchéité (22) étant appliquée contre la couche de matière plastique (2) tandis que la branche extérieure (24) forme la surface d'étanchéité.

18. Elément composite selon la revendication 17, **caractérisé en ce que** le joint d'étanchéité (22) constitue un élément d'étanchéité entre la partie inférieure (8) et la partie supérieure (9) du moule pendant l'application par moussage de la couche de matière plastique (2) sur le côté intérieur du revêtement extérieur (1).

19. Elément composite selon l'une des revendications précédentes, **caractérisé en ce que** la couche de matière plastique se compose d'une mousse PUR formée d'un polyole et d'un isocyanate suivant un rapport de mélange d'environ 1 à 2.

20. Elément composite selon l'une des revendications précédentes, **caractérisé en ce que** lorsque le revêtement extérieur (1, 1') se compose d'un film en matière plastique, celui-ci est flambé sur son côté intérieur, avant l'application de la matière plastique expansible, en vue de l'activation.

21. Elément composite selon l'une des revendications précédentes, **caractérisé en ce qu'**on applique sur le côté de la couche de matière plastique (2) opposé au revêtement extérieur (1) une structure décorative plane (3) choisie dans le groupe de matériaux constitué par les tissus textiles, les tissus à mailles, les mats, les treillis et les films de matière plastique et de métal.

22. Elément composite selon la revendication 21, **caractérisé en ce que** lorsqu'on utilise une structure décorative plane (3) poreuse, celle-ci est pourvue d'une couche de barrage tournée vers la couche de matière plastique (2).

23. Elément composite selon l'une des revendications précédentes, **caractérisé en ce que** le revêtement extérieur (1) présente une ouverture, et sur le côté de la matière plastique (2) opposé au revêtement extérieur (1), un profilé de guidage (14) est appliqué par moussage pour une un couvercle coulissant qui ferme sélectivement ladite ouverture.

24. Elément composite selon l'une des revendications précédentes, **caractérisé en ce qu'**une structure superficielle insonorisante (26') est appliquée par moussage derrière le côté de la couche de matière plastique (2') opposé au revêtement extérieur (1').

25. Elément composite selon l'une des revendications précédentes, **caractérisé en ce que** des zones d'amortissement (28') avec une densité réduite du matériau de mousse sont partiellement appliquées par moussage sur le côté de la couche de matière plastique (2') opposé au revêtement extérieur (1').
